# EUROPEAN PATENT SPECIFICATION

(11) **EP 3 083 848 B1**
(45) Date of publication and mention of the grant of the patent: **03.10.2018**
(21) Application number: 14827275.0
(22) Date of filing: 19.12.2014
(51) Int. Cl.: C09D 5/22

(54) **COMPOSITION AND METHOD FOR WOOD OR DERIVATIVES OF WOOD**
ZUSAMMENSETZUNG UND VERFAHREN FÜR HOLZ- ODER HOLZDERIVATE
COMPOSITION ET PROCÉDÉ POUR LE BOIS OU POUR DES DÉRIVÉS DU BOIS

(30) Priority: 20.12.2013 PT 10737613
(43) Date of publication of application: 26.10.2016
(73) Proprietor: Universidade Do Porto, 4099-002 Porto (PT)
(72) Inventor: GOMES ESTEVES DA SILVA, Joaquim Carlos, P-4169-007 Porto (PT); MILHAIS PINTO MENDONÇA, Maria Da Conceição, P-4005-766 Vila Nova De Gaia (PT); ANTUNES CRISTA, Diana Maria, P-4400-045 Vila Nova De Gaia (PT)
(74) Representative: Patentree
(86) International application number: PCT/IB2014/067142
(87) International publication number: WO 2015/092761

(56) References cited:
- WO-A1-86/03764
- GB-A- 706 104

## Description

### Technical field

The present disclosure describes a composition and method for wood or derivatives of wood, namely wood articles or derivatives of wood articles.

### Technical Background

The document US3201352A discloses phosphorescent materials and it is an object of that application to provide an improved phosphorescent material as well as a method of producing such a phosphorescent material. It is a still further object to incorporate the improved phosphorescent material into various articles or to apply it to the surface thereof. The disclosed phosphorescent materials possess an extreme resistance to water and moisture and because of their advantageous properties, the phosphorescent materials have a large field of application. They may be either incorporated into or applied to the surface of various materials. Incorporation is, for instance, possible into all cellulosic materials, especially all sorts of papers, into plastic materials, lacquers, impregnating compositions, printing or painting inks, paints etc. They may as well be applied to the surface of metals, wood, ceramic goods, paper or other solid materials. An especially important field of application is the use of the new phosphorescent material in statistical and data recording or photoelectric and electronic sorting equipment. For example, printing ink containing the phosphorescent material can be used to apply code marks on paper or other mass produced articles, which then can be sorted, identified or registered automatically by photocells. The phosphorescent material is especially suitable for such purposes as their phosphorescence shows a great intensity even after short irradiation and decreases only after a comparatively long period.

The document GB706104 discloses coloured vinyl polymers prepared by polymerization in a stirred aqueous suspension containing insoluble pulverulent substances, e.g. blanc fixe, a catalyst and an oil-pigment paste and in the absence of emulsifying agents. The vinyl compounds may be styrene and its derivatives, vinyl esters, vinyl and vinylidene chlorides, and acrylic or methacrylic acid esters and the catalysts may be hydrogen or benzoyl peroxide, or azo-di-iso butyronitrile. The colouring materials, e.g. titanium di-oxide, ferric oxide, zinc white, lamp-black, zinc or cadmium sulphide, and phosphorescent or fluorescent dyes, are ground with oily esters of higher aliphatic carboxylic acids such as linseed, varnish linseed, castor, dehydrated castor, oiticica and wood oils or their respective stand oils. The paste may also be tinted with oil soluble dyes. In examples, styrene is mixed with the pigment paste and catalyst, and introduced before or after partial polymerization, into a stirred aqueous suspension of blanc fixe. The resultant coloured beads are then pressed or injection moulded to plates.

The document GB1208558 discloses an organic phosphorescent composition comprising mixed crystals of (a) an anthraquinone compound selected from anthraquinone, a halogenated anthraquinone, an alkyl anthraquinone or mixtures thereof; and (b) at least 0.001 mole per cent, e.g. 0.05 mole per cent, of a polynuclear condensed-ring aromatic compound selected from pyrene, halopyrene, benz[a]-anthracene, benzo[ghi]perylene, coronene, the corresponding deuterated compounds, or mixtures thereof. The preferred upper limit of component (b) is the maximum completely soluble in the anthraquinone compounds, usually about 5.0 mole per cent. Fabrication may be by fusing the components together and allowing to crystallize, or preferably by dissolving the two components in a minimum amount of hot inert solvent, cooling to crystallize and separating. Anthraquinones instanced are 1-chloroanthraquinone; 2-chloroanthraquinone; 2,3-dichloroanthraquinone; 2-bromoanthraquinone, 2-fluoroanthraquinone, 2-methylanthraquinone, 2-ethylanthraquinone and 2-butylanthraquinone. Deuterated polynuclear condensed ring aromatic compounds are preferably employed for increased periods of phosphorescence. In a liquid vehicle the crystals should be present in amounts from 0.1 to 50 wt per cent. Incorporation into plastics, lacquers, paints, plastic shaped articles, and printing inks is instanced. Suitable plastic materials include polymers and copolymers containing polyolefins such as polyethylene and polypropylene, polyamides, polyacrylonitrile, polyvinyl acetate and cellulose esters. Paint and lacquer vehicles include alkyd base and latex, in a polymer emulsion, base paints and nitrocellulose lacquers, a specific paint including titanium dioxide, titanium calcium, zinc oxide, linseed soya-alkyd resin, mineral spirits and drier base. Ink compositions may be drying oil organic vehicle and modified mineral oil base inks, a styrenated mineral oil class and also a petrolatum and oleic acid base being specified. Paints, printing inks and lacquers may be applied to paper, wood, metal or plastic. Specific examples are disclosed and applications to automatic marking, sorting and identifying of papers by photo-cells and data recording applications are instanced. Emissions from 5300 to 5900 are instanced arid persistencies from 0.001 to 0.27 seconds. Loss of phosphorescence with decrease in temperature is mentioned.

The document WO200629100 discloses the development of a family of blends with polymers, paints, waxes and varnishes, among others, for which the afterglow lasts up top 24h after excitation. These applications embody phosphors of any color. These applications may also include a fluorescent pigment, so as to render materials with the same color under light, that are exhibited in the dark, e.g. a red fiber will glow red. Applications include oil- and water-based paints and inks, textile blends, thermosetting and thermoplastic polymer blends, writing implements, e.g., Crayons. One special application is a blend of infrared emitting phosphors with polymers for the manufacture of passive heating textiles, i.e. textiles that absorb visible and UV light and convert it into heat. The phosphors can be co-melted with glass to make glow-in-the dark glass for many applications, including UV-filtering windows.

The document US2013153118 discloses phosphorescent compositions as well as dyes and paints containing the same. This application is further directed to articles, produced by the use of these compositions, dyes or paints, and a process for producing luminescent glass articles. Thus, the object of such application is to provide dyes, paints and articles that are luminescent in the dark and that have a good appearance and can be prepared in a cost-saving manner, wherein the pigments can be charged within a relatively short period of time and the dyes and articles possess a long duration of luminescence. A further object is to provide paints and dyes, in particular for spray coating, that can be used in the interior as well as in the outdoor area, that adhere to materials, such as textile, metal, stone, glass, plastics, concrete, wood and asphalt and that can be easily applied. This object was solved by means of phosphorescent compositions that comprise:
(a) glass powder, the glass powder being lead-free glass powder, selected from lime soda glass, borosilicate glass, float glass and phosphate glass; and
(b) phosphorescent pigment.

The document KR20120067139 discloses a phosphorescent paint composition and a method for manufacturing provided to enhance luminance of light, thereby increasing visibility of printing films. The disclosed phosphorescent paint composition comprises a FET film, a phosphorescent film, a reflecting film, a printing film and hot melt film. The PET film has a bonding layer in bottom surface which is capable of exfoliation and adhesion. The phosphorescent film consists of polyester which luminescence agents are coated. The reflective film is laminated in lower surface of the phosphorescent film. The reflective film coats reflexive material in which liquid polyurethanes and glass powder are mixed. The printing film is laminated in lower surface of the reflective film. In upperside of the printing film, print material is indicated. The hot melt film is laminated in lower surface of the printing film.

The document WO 86/03764 discloses a composition for wood or derivatives of wood comprising the following elements: a wood oil, a phosphorescent pigment and a stabilizer.

In order to address the above mentioned technical problems and despites deficiencies related to the above solutions it is desirable to develop composition that does not paint the wood and confers the wood articles phosphorescent properties.

### General Description

In view of the drawbacks to prior art, one of technical problem underlying by the present disclosure is how to achieve a composition that does not paint the wood i.e. maintains the natural wood properties and also confers the wood articles phosphorescent properties.

After some tests with varnish and paints a composition for wood or derivatives of wood was surprisingly achieved comprising the following elements: a wood oil; a phosphorescent pigment that emits radiation in the visible wavelength range and a stabilizer to keep the mixture homogeneous, preferably comprising a phosphorescent pigment concentration bellow to 1000 g _{phosphorescent pigment}/L _{wood oil}.

In an embodiment, the stabilization of the suspension of the phosphor in the wood oil is achieved by a physical stabilization agent, i.e. a suspending/binder agent that will keep the mixture homogeneous, in particular a stabilizer to keep the mixture homogeneous during 1 hour.

In an embodiment, the composition may include:
- the phosphorescent pigment concentration is between 60 to 720 g/L of wood oil, more preferably 120 -250 g/L of wood oil;
- the stabilizer concentration is between 5-50 g/L of wood oil, preferably 10-15 g/L of wood oil.

In an embodiment, the phosphorescent pigment concentration can be: 100 g _{phosphorescent pigment}/L _{wood oil}, 150 g _{phosphorescent pigment}/L _{wood oil}, 200 g _{phosphorescent pigment}/L _{wood oil,} 250 g _{phosphorescent pigment}/L _{wood oil}, 300 g _{phosphorescent pigment}/L _{wood oil}, 400 g _{phosphorescent pigment}/L _{wood oil}, 500 g _{phosphorescent pigment/}L _{wood oil}, 600 g _{phosphorescent pigment}/L _{wood oil}, 700 g _{phosphorescent pigment}/L _{wood oil}.

In another embodiment, the phosphorescent pigment of the composition may be a long persistent phosphor, in particular with a persistence time of at least five hours. In other embodiment, the phosphorescent pigment of the composition may be one of the following group: green light emitter phosphor with the formula [SrAlO₄:Eu,Dy]; the turquoise light emitter with the formula [(Ca,Sr)AlO₄:Eu,Dy]; violet-blue light emitter with the formula [CaAlO₄:Eu,Dy]; or mixtures thereof.

In another embodiment, the phosphorescent pigments of the composition may be size between 30-70 micrometers, preferably 50 micrometers.

In even another embodiment, the wood oil of the composition may comprise a mixture of vegetable oils, silicic acid, drying and antioxidants agents.

In an embodiment, the vegetable oils of the composition may be refined sunflower, wood and linseed oils.

In another embodiment, the drying agents used in the composition may be free of lead and are non-toxic.

In even another embodiment, the antioxidant agents in the composition may be free from phenol and oxime and are non-toxic.

In an embodiment, the stabilizer can be select from a group consisting of polysaccharides gums, natural clay minerals or their synthetic derivatives, or mixtures thereof, in particular xanthan gum, guar gum, carob bean gum, or mixtures thereof, among others.

In even another embodiment, the stabilizer of the composition is used in a concentration of 10 g/L of wood oil, preferably up to 50g/L of wood oil.

In an embodiment, the composition further comprises an antiskinning agent, namely methyl ethyl ketoxime among others. In even another embodiment, the antiskinning agent of the composition is used in a concentration of 5 mL/L of wood oil.

The present application also discloses a phosphorescent wood oils or a stain comprising the composition described above.

The present application also discloses a method to produce a composition comprising the mixing of a wood oil with a phosphorescent pigment and an stabilizer agent. Preferably, the mixing of the method is made with the aid of grinding balls.

In another embodiment, the oils used in the method are applied to wood surfaces manually, in particular using a common brush or using paint guns.

The present application also discloses wood articles or derivatives of wood articles coated with the composition described above. Namely the articles may be indoor or outdoor furniture, floor, seals, living trees, footers, musical instruments, jewelry, boats, pools, bee hives or playgrounds, among others.

### Brief Description of the Figures

For an easier understanding of the embodiment there are attached figures, which represent preferred embodiments, which however, are not intended to limit the scope of the present embodiment.
Figure 1 shows a scanning electronic microscopy (SEM) image of an Ipê wood plank before, Figure 1.a, and after two applications of a typical formulation of the phosphorescent wood oil product, Figure 1.b and c.
Figure 2 shows a photograph of Ipê wood before application of the phosphorescent wood oil product, Figure 2.a, after its application and under day light, Figure 2.b, and after its application and in the dark after exposition to day light, Figure 2.c

### Description of embodiments

The present disclosure discloses a composition, methods for making and characteristics of new products for wood that incorporates wood oils, long persistent phosphors and stabilization agents. The present composition constitute a technology for wood that allows, after its application, the development of phosphorescent wood planks, i.e., wood planks that emit green, turquoise and violet-blue light in the dark. The phosphorescence of the wood planks persists visible in the dark after exposition to day or artificial light. Moreover, the phosphorescence is stable upon exposition to heavy rain (water) and shows good resistance to physical wear. This product can be applied to wood (indoor or outdoor) with the following proposes: decoration; safety; energy economy; etc.

The disclosure composition surprisingly solves the problem of conferring the surface of wood a long persistent glow-in-the-dark.

This phosphorescent wood oils were developed using wood oil made from a non-toxic mixture of refined vegetable oils, namely sunflower, wood and linseed oils, silicic acid, drying agents free of lead and antioxidant agents free from phenol and oxime. Nevertheless, the basis of the phosphorescent wood oil can be any natural, made from single or mixtures of refined vegetable oils, for example oils from: sunflower, wood, linseed, soy, tung, castor, flax and tall, or synthetic wood finishing oil, generally known as "tung oil finishes", "drying oil", "tongue oil", "china wood oil" or simply "wood oil", used for wood treatment. Besides the vegetable or synthetic oils, other components may be present as stabilizers, drying and antioxidant agents. Wood oils are used as preservatives to accentuate the natural colour of the wood, to provide a relatively hard surface and waterproof finish and an increased slip resistance.

The phosphorescence of the oil is due to the addition of an inorganic pigment, named phosphor, or a mixture of them. The phosphorescent pigments used were any of the individual long persistent and non-toxic phosphor types with a general chemical formula [SrAlO₄:Eu,Dy] (green light emitter), [(Ca,Sr)AlO₄:Eu,Dy] (turquoise light emitter) or [CaAlO₄:Eu,Dy] (violet-blue light emitter). However, any phosphor emitting radiation in the visible wavelength range with a chemical formula derived from aluminium oxide, iron oxide, yttrium oxide, europium oxide, gadolinium oxide, dysprosium oxide, terbium oxide, calcium phosphate and zinc sulphide can be used. By varying or combining the substances, different colours of phosphorescence can be obtained. The concentration of phosphor in the final phosphorescent wood oil can be as high as 1000 g/L.

When skin is formed in the final product and upon storage, methyl ethyl ketoxime (MEKO) can be used up to 10 mL/L as an antiskinning and antioxidant agent. Other chemical substances or mixtures of chemical substances, with similarfunction can be used instead.

The phosphorescence wood oils herein described are therefore the result of possible mixtures of the components, being exemplary rather then limiting. Hence, wood oils, phosphorescent pigments of different nature or emitting radiation in other visible wavelength and stabilization agents as described can be used instead. Additionally, other substances can be added to the phosphorescent wood oils conferring it additional properties to its already inherent properties, namely wood protection and phosphorescence. For instance, phosphorescent wood oils can be enriched with perfumed substances, antifungals, insects and other small animal repellents, substances which give texture/relief to flat surfaces, among others, extending the range of application of such oils.

In one embodiment, the composition for wood treatment may comprises a phosphorescent wood oil: phosphor (120 g/L), stabilizing agent (10 g/L), antiskinning agent (5 mL/L). Although, several formulations with different phosphorescent intensities of the phosphorescent wood oils were obtained with that composition of the stabilizing agent (10 g/L), antiskinning agent (5 mL/L) and one phosphor with 60, 120, 240, 360 and 720 g/L.

In an embodiment the stabilization of the suspension of the phosphor in the wood oil is achieved by a physical stabilization agent, suspending/binder agent that will keep the mixture homogeneous. For example, xanthan gum can be used as a non-toxic stabilizer, thickener and emulsifier. Xanthan gum can be used up to 50g/L. However, other polysaccharides gums, for example guar gum and carob bean gum, or mixtures of polysaccharides gums, can be used instead with similar function.

The final phosphorescent wood oils are obtained by a straightforward technology, where its components subjected to a mixing, in particular strong mechanical mixing with the aid of grinding balls. This mixing in the presence of the above referred stabilization agents will allow the mixture to be homogeneous, i.e. a stable mixture, for at least five hours after preparation. In some embodiments of the composition, if stocking the final product for long periods of time, it must be well shaken before application.

This present disclosure described a technology for wood treatment that, besides the intrinsic preservative properties of wood oil, allows the development of wood planks that emit light in the dark by a phosphorescent mechanism - phosphorescent wood planks - after being exposed to natural or artificial light.

The phosphorescent wood oils can be applied to wood manually using a common brush, or using paint guns in large scale contexts, which demonstrates its ease of use.

As a proof-of-concept, the phosphorescent wood oils were applied to Ipê (Talebui), Yellow Cumaru (Dipteryx Odorata) and Red Cumaru (Dipteryx Alata) wood (scientific name under parenthesis) planks. However, it can be applied to any type of natural or processed wood surface. For example, the following woods can be used: White or Red Oak (Quercus), American Cherry (Prunus Serotina), Ash (Fraxinus), Hard Maple (Acer Saccharum), Hemlock (Tsuga Heterophylla Sarg.), Walnut (Juglans Nigra), American Pine (Pinus Taeda), Red Alder (Alnus Rura), Yellow Poplar (Liriodendron Tulipifera), European Oak (Quercos Rober L.), French Chestnut (Castanea Sativa Mill), beech (Fagus Sylvatica L.), Portuguese Pine (Pinus Pinaster), Riga (Pinus Nigra Ssp), Andiroba (Carapa Guianensis), Brazilian Cherry (Amurana Cearensis), Garapa (Apuleia Leiocarpa), Jatobá (Hymenaea Coubaril), Massarandua (Manikara Spp), Quarua (Vochysia Spp), Sucupira (Bowdichia nitida benth), Tamarindo (Tamarindus), Tatajuba (Bagassa Guiarensis), Tauari (Couratari Spp), Afizélia (Afzelia Africana Smith), Iatandza (Albizzia Ferruginea benth), Izombé (Testulea), Kamala (Chlorophora Excelsa), Okoume (Aucoumea Klaineana Pierre), Panga Panga (Milletia Laurentti), Sapeli (Entandrophragma Cylindricum) and Tola (Gosweilerodendron balsamiferum). Other cellulose materials, including cork and paper, or porous materials, as ceramics, can be treated with the phosphorescent wood oils herein described as long as they are capable of absorbing and retaining the product.

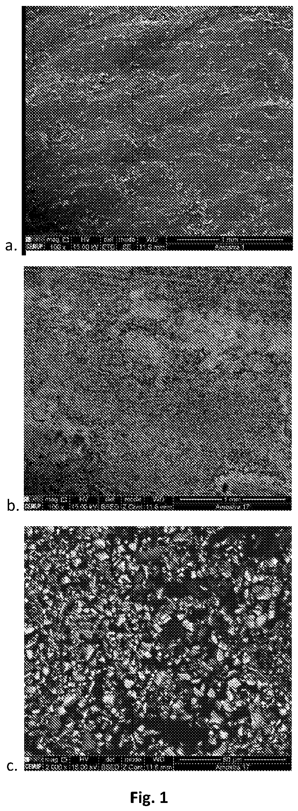

After application to wood planks a homogeneous hydrophobic capping, depending on the wood surface preparation, is obtained with phosphor pigments of size of a few micrometers, as illustrated in Figure 1a, 1b and 1c. Additionally, after its application to wood planks, the surface of wood keeps its natural visual look under natural or artificial light, a critical advantage over other known phosphorescent wood products, namely varnishes or inks.

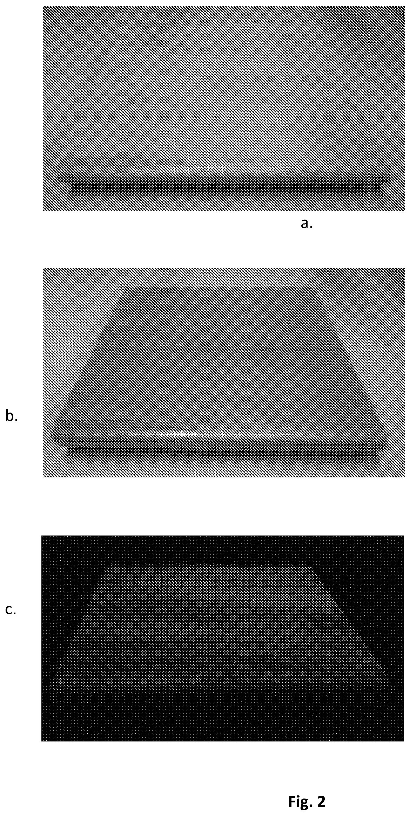

The phosphorescence of the wood planks persists visible in the dark after exposition to day or artificial light, as illustrated in Figure 2. Also, the phosphorescence of the wood planks is stable upon exposition to heavy rain (water) and show good resistance to physical wear.

The use of non-toxic wood oils, phosphorescent pigments and stabilizer in this technology is a critical advantage over other known phosphorescent wood products, namely varnishes or inks. Toxic products can slowly leach into the surrounding soil or water, or leave residue on exposed skin, and have therefore limited use. If the wood oil contains no hazardous materials, the incorporation of phosphors and suspension stabilization agents will not originate a final product that originates any toxicity concerns towards human health. This extends the application of the described products to virtually any wood surface, including, but not restricted to: indoor or outdoor furniture, floor and seals, even those in direct contact with gardens and soil, living trees, footers, musical instruments, jewelry, boats, pools, bee hives, playgrounds, etc. However, if antiskinning agents are used, it may originate some toxicity concerns.

Summing up, this present disclosure describes compositions of phosphorescent wood oils that can be applied to virtually any wood surface, as well as the method of making them and its characteristics.

Table 1 - Natural wood samples with no treatment, treated with standard wood oil and with phosphorescent wood oil with increasing quantity - from 120 up to 1000 g/L - of a long persistent phosphorescent pigment. Wood samples treated with the phosphorescent oil were exposed for five minutes to a 8 W fluorescent black light (UV-A ultraviolet light) and, just after that exposition period, the intensity of the light emission (Int, expressed as CPS - counts per second) was measured at 518 nm using a Horiba Jovin Yvon Fluoromax 4 TCSPC spectrophotometer with the excitation light off (an emission spectrum was acquired in the wavelength range between 380 to 700 nm with a emission slit 20 nm and 0.1 s integration time). At concentrations of the long persistent phosphorescent pigment higher than about 720 g/L the vision of the natural wood surface is compromised because the deposited pigment become visible.

| **Treatment** | **Intensity of the light emission** | |
|---|---|---|
| | **Dipteryx Alata wood** | **Quercus Wood** |
| No treatment | n.a. | n.a. |
| Standard Oil (Maintenance of the wood natural color) | n.a. | n.a. |
| Phosphorescent oil (120 g/L) (Maintenance of the wood natural color) | Int = 4.6x10⁶ CPS | Int = 5.2x10⁶ CPS |
| Phosphorescent oil (200 g/L) (Maintenance of the wood natural color) | Int = 5.0x10⁶ CPS | Int = 6.3x10⁶ CPS |
| Phosphorescent oil (300 g/L of) (Maintenance of the wood natural color) | Int = 5.9x10⁶ CPS | Int = 5.9x10⁶ CPS |
| Phosphorescent oil (400 g/L) (Maintenance of the wood natural color) | Int = 7.8x10⁶ CPS | Int = 8.0x10⁶ CPS |
| Phosphorescent oil (500 g/L) (Maintenance of the wood natural color) | Int = 8.0x10⁶ CPS | Int = 8.2x10⁶ CPS |
| Phosphorescent oil (600 g/L) (Maintenance of the wood natural color) | Int = 8.2x10⁶ CPS | Int = 8.8x10⁶ CPS |
| Phosphorescent oil (720 g/L) (Maintenance of the wood natural color) | Int = 9.7x10⁶ CPS | Int = 9.9x10⁶ CPS |
| Phosphorescent oil (1000 g/L) (Alteration of the wood natural color) | Int = 1.3x107 CPS | Int = 1.4x107 CPS |

The application of the phosphorescent wood oils follows the same requirements of the raw wood oil, serving as wood preservatives, to accentuate the natural colour of the wood, to provide a relatively hard surface and waterproof finish and an increased slip resistance. However, by conferring phosphorescence to wood planks, these products can be applied to wood also with the following proposes: decoration, colouring objects, adding written messages or drawings/art, energy saving, illuminating indoor/outdoor spaces or walking trails without the use of electricity, safety/signalling, illuminating an area in the dark, etc. Besides, compositions enriched with other substances can be used, namely for additional decorative (odors or perfuming, texturing) and wood preservation (fungal or insects/other animals attack) purposes. Because of its characteristics, namely stability under storage and ease-of-use, they can be can be made available as a product per se or be applied to wood planks and be provided as such.

The disclosure is, of course, not in any way restricted to the embodiments described and a person with ordinary skill in the art will foresee many possibilities to modifications thereof without departing from the basic idea of the invention as defined in the appended claims.

The preferred embodiments described above are obviously combinable. The following claims define further preferred embodiments.

## Claims

1. A composition for wood or derivatives of wood comprising the following elements: a wood oil; a phosphorescent pigment that emits radiation in the visible wavelength range and a stabilizer to keep the mixture homogeneous during 1 hour
wherein:
the phosphorescent pigment concentration is between 60 - 720 g/L of wood oil wherein the phosphorescent pigment is one of the following group: green light emitter phosphor with the formula [SrAlO₄:Eu,Dy]; the turquoise light emitter with the formula [(Ca,Sr)AlO₄:Eu,Dy]; violet-blue light emitter with the formula [CaAlO₄:Eu,Dy]; or mixtures thereof;
the stabilizer concentration is between 5-50 g/L of wood oil.

2. The composition according to claim 1 wherein:
• the phosphorescent pigment concentration is between 120 -250 g/L of wood oil;
• the stabilizer concentration is between 10-15 g/L of wood oil.

3. The composition according to claim 1 wherein the phosphorescent pigment concentration is between 400 - 720 g/L of wood oil.

4. The composition according to any of the claims 1 or 2 wherein the phosphorescent pigment concentration is 100 g_{phosphorescent pigment}/L_{wood oil}, 150 g _{phosphorescent pigment}/L _{wood oil}, 200 g_{phosphorescent pigment}/L_{wood oil}, 250 g_{phosphorescent pigment}/L _{wood oil}, 300 g_{phosphorescent pigment}/L_{wood oil}, 400 g_{phosphorescent pigment}/L_{wood oil}, 500 g _{phosphorescent pigment}/L_{wood oil}, 600 g_{phosphorescent pigment}/L_{wood oil}, 700 g_{phosphorescent pigment}/L _{wood oil}.

5. The composition according to any of the previous claims wherein the phosphorescent pigment is a long persistent phosphor, in particular with a persistence time of at least five hours.

6. The composition according to any of the previous claims, wherein the phosphorescent pigments are of size between 30-70 micrometers, preferably 50 micrometers.

7. The composition according to any of the previous claims, wherein the wood oil comprises a mixture of vegetable oils, silicic acid, drying and antioxidants agents.

8. The composition according to any of the previous claims, wherein the stabilizer is select from a group consisting of polysaccharides gums, natural clay minerals or their synthetic derivatives, or mixtures thereof.

9. The composition according to the previous claims, wherein the stabilizer is select from a group consisting of xanthan gum, guar gum, carob bean gum, or mixtures thereof.

10. The composition according to any of the previous claims, wherein the stabilizer is used in a concentration of 10 g/L of wood oil, preferably up to 50 g/L of wood oil.

11. The composition according to any of the previous claims further comprising an antiskinning agent, preferably wherein the antiskinning agent is methyl ethyl ketoxime.

12. The composition according to the previous claim, wherein the antiskinning agent is methyl ethyl ketoxime.

13. The composition according to the claims 11-12 wherein the antiskinning agent is used in a concentration of 5 mL/L of wood oil.

14. Phosphorescent wood oils comprising the composition described in any one of the claims 1 to 13.

15. Stain comprising the composition described in any one of the claims 1 to 13.

16. Wood articles or derivatives of wood articles coated with the composition described in any one of the claims 1 to 13.

17. Articles according to the preceding claim wherein the article is: indoor or outdoor furniture, floor, seals, living trees, footers, musical instruments, jewelry, boats, pools, bee hives or playgrounds.

## Patentansprüche

1. Eine Zusammensetzung für Holz oder Holzderivate, umfassend die folgenden Elemente: ein Holzöl; ein Phosphoreszenzpigment, das Strahlung im sichtbaren Wellenlängenbereich emittiert, und ein Stabilisator, um die Mischung eine Stunde lang homogen zu halten
wobei:
die Konzentration des Phosphoreszenzpigments zwischen 60 - 720 g/l Holzöl liegt, wobei das Phosphoreszenzpigment aus einer der folgenden Gruppen stammt: der grüne Lichtemitter Phosphor mit der Formel [SrAlO₄:Eu,Dy]; der türkise Lichtemitter mit der Formel [(Ca,Sr)AlO₄:Eu,Dy]; der violettblaue Lichtemitter mit der Formel [CaAlO₄:Eu,Dy] oder Mischungen davon;
die Konzentration des Stabilisators liegt zwischen 5 - 50 g/l Holzöl.

2. Die Zusammensetzung nach Anspruch 1, wobei:
• die Konzentration des Phosphoreszenzpigments zwischen 120 - 250 g/l Holzöl liegt;
• die Konzentration des Stabilisators zwischen 10 - 50 g/l Holzöl liegt.

3. Die Zusammensetzung nach Anspruch 1, wobei die Konzentration des Phosphoreszenzpigments zwischen 400 - 720 g/l Holzöl liegt.

4. Die Zusammensetzung nach einem der Ansprüche 1 oder 2, wobei die Konzentration des Phosphoreszenzpigments bei 100 g_{Phosphoreszenzpigment}/I_{Holzöl}, 150 g_{Phosphoreszenzpigment}/I _{Holzöl}, 200 g _{Phosphoreszenzpigment}/I_{Holzöl}, 250 g_{Phosphoreszenzpigment}/I_{Holzöl}, 300 g_{Phosphoreszenzpigment}/I _{Holzöl}, 400 g_{Phosphoreszenzpigment}/I_{Holzöl}, 500 g_{Phosphoreszenzpigment}/I_{Holzöl}, 600 g_{Phosphoreszenzpigment}/I _{Holzöl}, 700 g_{Phosphoreszenzpigment}/I_{Holzöl} liegt.

5. Die Zusammensetzung nach einem der vorangehenden Ansprüche, wobei das Phosphoreszenzpigment ein lang leuchtender Phosphor ist, insbesondere mit einer Leuchtzeit von mindestens fünf Stunden.

6. Die Zusammensetzung nach einem der vorangehenden Ansprüche, wobei die Phosphoreszenzpigmente eine Größe zwischen 30 - 70 Mikrometer, besonders bevorzugt 50 Mikrometer aufweisen.

7. Die Zusammensetzung nach einem der vorangehenden Ansprüche, wobei das Holzöl eine Mischung aus Pflanzenölen, Kieselsäure, Trocken- und Antioxidationsmitteln umfasst.

8. Die Zusammensetzung nach einem der vorangehenden Ansprüche, wobei der Stabilisator aus einer Gruppe ausgewählt ist, die aus Polysacchariden, natürlichen Tonmineralien oder deren synthetischen Derivaten oder Mischungen davon besteht.

9. Die Zusammensetzung nach einem der vorangehenden Ansprüche, wobei der Stabilisator aus einer Gruppe ausgewählt ist, die aus Xanthan, Guarkernmehl, Johannisbrotkernmehl oder Mischungen davon besteht.

10. Die Zusammensetzung nach einem der vorangehenden Ansprüche, wobei der Stabilisator in einer Konzentration von 10g/l Holzöl, besonders bevorzugt bis zu 50 g/l Holzöl, verwendet wird.

11. Die Zusammensetzung nach einem der vorangehenden Ansprüche ferner umfassend ein Hautverhinderungsmittel, wobei das Hautverhinderungsmittel besonders bevorzugt Methylethylketoxim ist.

12. Die Zusammensetzung nach einem der vorangehenden Ansprüche, wobei das Hautverhinderungsmittel Methylethylketoxim ist.

13. Die Zusammensetzung nach einem der Ansprüche 11-12, wobei das Hautverhinderungsmittel in einer Konzentration von 5 ml/l Holzöl verwendet wird.

14. Phosphoreszierende Holzöle, umfassend die in einem der Ansprüche 1 bis 13 beschriebene Zusammensetzung.

15. Farbstoff, umfassend die in einem der Ansprüche 1 bis 13 beschriebene Zusammensetzung.

16. Holzartikel oder Derivate von Holzartikeln, die mit der in einem der Ansprüche 1 bis 13 beschriebenen Zusammensetzung beschichtet sind.

17. Artikel gemäß dem vorstehenden Anspruch, wobei der Artikel ist: Möbel für Innen oder Außen, Boden, Verschlüsse, lebende Bäume, Fundamente, Musikinstrumente, Schmuck, Boote, Becken, Bienenstöcke oder Spielplätze.

## Revendications

1. Une composition pour le bois ou les dérivés de bois comprenant les éléments suivants : une huile de bois ; un pigment phosphorescent qui émet une radiation dans le domaine de longueur d'onde visible et un stabilisateur pour maintenir le mélange homogène pendant 1 heure
dans laquelle :
la concentration du pigment phosphorescent est comprise entre 60-720 g/L d'huile de bois, dans laquelle le pigment phosphorescent appartient à l'un des groupes suivants : phosphore émetteur de lumière verte ayant pour formule [SrAlO₄:Eu,Dy] ; l'émetteur de lumière turquoise ayant pour formule [(Ca,Sr)AlO₄:Eu,Dy] ; l'émetteur de lumière bleu-violet ayant pour formule [CaAlO₄:Eu,Dy] ; ou un mélange de ceux-ci ;
la concentration de stabilisateur est comprise entre 5-50 g/L d'huile de bois.

2. La composition selon la revendication 1, dans laquelle:
• la concentration de pigment phosphorescent est comprise entre 120-250 g/L d'huile de bois;
• la concentration de stabilisateur est comprise entre 10-15 g/L d'huile de bois.

3. La composition selon la revendication 1, dans laquelle la concentration de pigment phosphorescent est comprise entre 400-720 g/L d'huile de bois.

4. La composition selon l'une quelconque des revendications 1 ou 2, dans laquelle la concentration de pigment phosphorescent est de 100 g de _{pigment phosphorescent}/L_{d'huile de bois}, 150 g de_{pigment phosphorescent}/L_{d'huile de bois}, 200 g de_{pigment phosphorescent}/L_{d'huile de bois}, 250 g de_{pigment phosphorescent}/L_{d'huile de bois}, 300 g de_{pigment phosphorescent}/L_{d'huile de bois}, 400 g de _{pigment phosphorescent}/L_{d'huile de bois}, 500 g de_{pigment phosphorescent}/L_{d'huile de bois}, 600 g de_{pigment phosphorescent}/L_{d'huile de bois}, 700 g_{depigment phosphorescent}/L_{d'huile de bois}.

5. La composition selon l'une quelconque des revendications antérieures, dans laquelle le pigment phosphorescent est un phosphore à longue persistance, disposant en particulier d'un temps de persistance d'au moins cinq heures.

6. La composition selon l'une quelconque des revendications antérieures, dans laquelle les pigments phosphorescents ont une taille comprise entre 30-70 micromètres, de préférence 50 micromètres.

7. La composition selon l'une quelconque des revendications antérieures, dans laquelle l'huile de bois comprend un mélange d'huiles végétales, d'acide silicique, d'agents siccatifs et d'agents antioxydants.

8. La composition selon l'une quelconque des revendications antérieures, dans laquelle le stabilisateur est sélectionné à partir d'un groupe composé de gommes polysaccharides, de minéraux d'argile naturels, ou de leurs dérivés synthétiques, ou d'un mélange de ceux-ci.

9. La composition selon l'une quelconque des revendications antérieures, dans laquelle le stabilisateur est sélectionné à partir d'un groupe composé de gomme xanthane, de gomme de guar, de gomme de caroube, ou d'un mélange de celles-ci.

10. La composition selon l'une quelconque des revendications antérieures, dans laquelle le stabilisateur est utilisé dans une concentration de 10 g/L d'huile de bois, de préférence jusqu'à 50 g/L d'huile de bois.

11. La composition selon l'une quelconque des revendications antérieures comprenant en outre un agent antipeau, de préférence dans laquelle l'agent antipeau est la méthyléthylcétoxime.

12. La composition selon la revendication précédente, dans laquelle l'agent antipeau est la méthyléthylcétoxime.

13. La composition selon les revendication 11-12, dans laquelle l'agent antipeau est utilisé en une concentration de 5 mL/L d'huile de bois.

14. Huiles de bois phosphorescentes comprenant la composition décrite dans l'une quelconque des revendications 1 à 13.

15. Colorant comprenant la composition décrite dans l'une quelconque des revendications 1 à 13.

16. Articles en bois ou articles en dérivés de bois enduits avec la composition décrite dans l'une quelconque des revendications 1 à 13.

17. Articles selon la revendication précédente, dans lesquels l'article est un des éléments suivants : mobilier d'intérieur ou d'extérieur, planchers, joints, arbres vivants, plinthes, instruments de musique, bijoux, bateaux, piscines, ruches ou aires de jeu.
